# EUROPEAN PATENT APPLICATION

(11) **EP 3 395 316 A1**
(43) Date of publication of application: **31.10.2018**
(21) Application number: 17466011.8
(22) Date of filing: 12.09.2017
(51) Int. Cl.: A61H 3/04, B60G 11/22

(54) **MULTIROBOT FOR TRANSPORT AND REHABILITATION**

(30) Priority: 24.04.2017 CZ 20170221
(71) Applicant: Robotsystem, s.r.o., 702 00 Ostrava-Moravská Ostrava (CZ); Haladova, Petra, 73937 Horni Bludovice (CZ)
(72) Inventor: Halada, Pavel, 736 01 Havírov-Mesto (CZ); Haladová, Petra, 739 37 Horní Bludovice (CZ)

(57) **Abstract**

Multirobot is intended for rehabilitation or recreational support physically handicapped persons as a multipurpose therapeutic, rehabilitation and training device to maintain physical condition and to ensure the everyday life tasks.

It consists of two main subassemblies which are the chassis (2) and control telescopic column (3), where the basic part of the chassis (2) is a U-shape frame (4), having in the rear part in its flight endings transverse square profiles (6) which are part of the spring and damping torsion units (5), while each unit (5) is thus composed of said square profile (6), further four rubber cords (8) inserted into it, and center-lead pin (7) with a square cross-section, where each pin (7) with a square cross-section is part of two damped and split rear forks (9), while at the end of each of them a wheel with an inserted electric motor is stored.

## Description

### TECHNICAL FIELD

Multirobot for transport and rehabilitation belongs to the field of versatile and multipurpose therapeutic, rehabilitation and training devices with the aim to maintain physical condition, intended for rehabilitation processes of patients, partially immobile persons, physically disabled seniors, for to support life without assistance, as well as to ensure everyday life, including the use for leisure activities and maintaining physical condition.

### DESCRIPTION OF THE PRIOR ART

Currently, there is no robotic technology in the world markets according to the invention - a multirobot with the ability of transfiguration of its technology between its utilization as a robotic device for guided gait rehabilitation with support and between its utilization as a full-fledged assisted, remotely or programmably controlled means of transport for ride in standing position (segway analogy), for use in outdoor and indoor environment, in institutional, home or outdoor environment in open terrain.

World companies - Swiss company Hocoma (patent no. EP15886291), French company BA HEALTHCARE, Japanese robotic lab JAIST (walker JARoW), and others, deliver single-purpose devices only for gait rehabilitation or multi-purpose robotic wheelchairs for patient transport - for example, Otto Bock company - particularly the Xeno type - a verticalization wheelchair, and many others, which allow both ride in standing and sitting position but they do not include the function of guided gait rehabilitation, with a system of robotic transfiguration enabling the association of the function of a controlled rehabilitation process and function of ride in standing position, with an addition of usability of assisted, remote or programmable control of user transport.

The proposed multirobot, compared to the above mentioned and a number of other solutions, associates several vastly different functions in one robotic monoblock - the function of the height adjustability of the supporting skeleton - elbow rests and handle via an electronically controlled telescopic pole; the function of electronically controlled wheel units with electric drive and control system embedded directly in their space; the function of retractable and tilting electronically controlled footboards to provide a combination of guided gait rehabilitation and electronically and robotically controlled user transport in standing position, outdoor and indoor, with benefit of use of all functions both in usual daily and leisure activities as well as in the domestic or institutional environment for purposeful use to special and highly sophisticated rehabilitation processes.

### SUMMARY OF THE INVENTION

The above mentioned disadvantages are solved by the multirobot for transport and rehabilitation, consisting of two main subassemblies such as chassis and control telescopic column, the essence of which is that the basic part of the chassis is a U-shape frame having at the rear part, at its overhung endings transverse square profiles which are part of the spring and damping torsion units; while each unit is thus composed of said square profile, further four rubber cords inserted into it, and a center-led pin with a square cross-section, where each pin with a square cross-section is part of two damped and split rear forks; while at the end of each of them a wheel with an inserted electric motor is stored;
while into each of sidewalls of the frame there are from the inner side constrained eyes in which there is pivotally arranged a footboard that is interconnected with rotary drive through a rubber flexible shaft where it is connected with a connecting coupling supplemented with a hose clamp; and at the opposite side there is the flexible shaft running through the center of the hollow pin of the footboard ended by a pressed sleeve which is connected with a shaped projection; while in the frame on the level of footboards, there in the sidewalls are fixed stops which are part of the bed for storing of electric accumulators, and in the front part of the frame there is longitudinally and firmly constrained an overhung pin with a square cross-section which is in the central part of the spring and damping torsion unit on which the front axle is pivotally mounted;
while the front axle consists of a transverse beam in the central part of which there is the square profile which is a part of the spring and damping torsion unit, where at the ends of the transverse beam at the front axle there are the horizontal housings in which there are in the bearings rotatably mounted the extensions with a horizontal pin, where each of these extensions with horizontal pin is ended by the square profile;
while through its center there passes the overhung pin with a square cross-section is a part of the front split fork where in each of the forks there is provided a non-driven front wheel.
while a part of the frame at the point of the horizontal overhung pin with a square cross-section, there is a bracket for attaching the control telescopic column part of which is a controlled panel arranged in its upper part; while on its sidewalls there fitted are elbow rests with handle on which the directional and speed controls are located in the upper parts;
while the basic part of the control telescopic column is a retractable telescopic column, and there is a distance piece between the retractable telescopic column, and the bracket.

The advantage is when the multirobot for transport and rehabilitation is equipped with covers; while under the covers in the front part, on the transom of the frame, on one side of the retractable telescopic column, there is a charger arranged, and there are control units of electric motors on the opposite side.

The advantage of the proposed multirobot is, that it associates several vastly different functions in one robotic technology - the function of height adjustability of the supporting skeleton - elbow rests and handle via an electronically controlled telescopic pole; the function of electronically controlled wheel units with electric drive and control system embedded directly in their space; the function of retractable and tilting electronically controlled footboards to provide a combination of guided gait rehabilitation and electronically and robotically controlled user transport in standing position, outdoor and indoor.

### OVERVIEW OF DRAWINGS

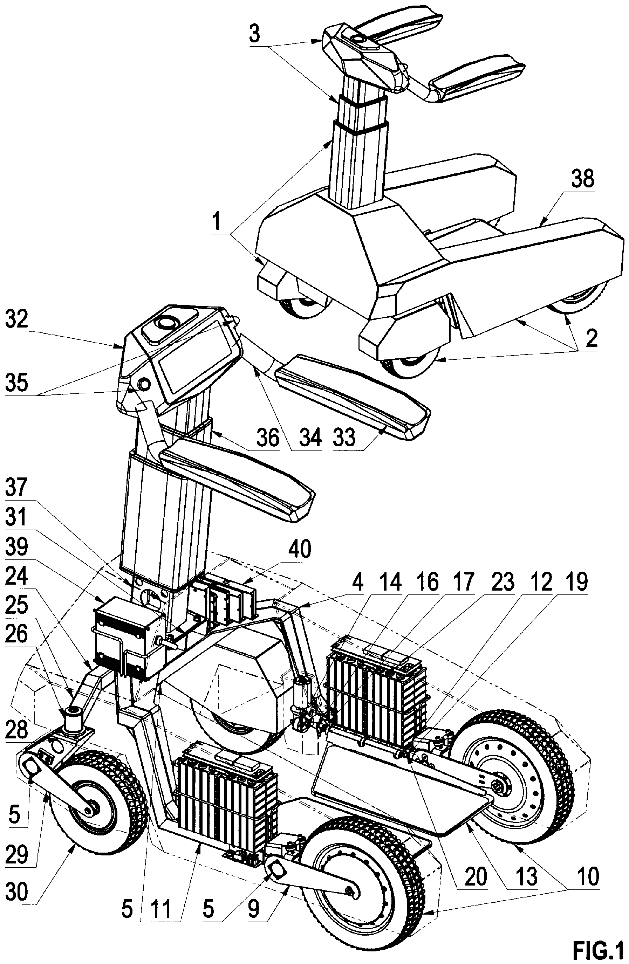

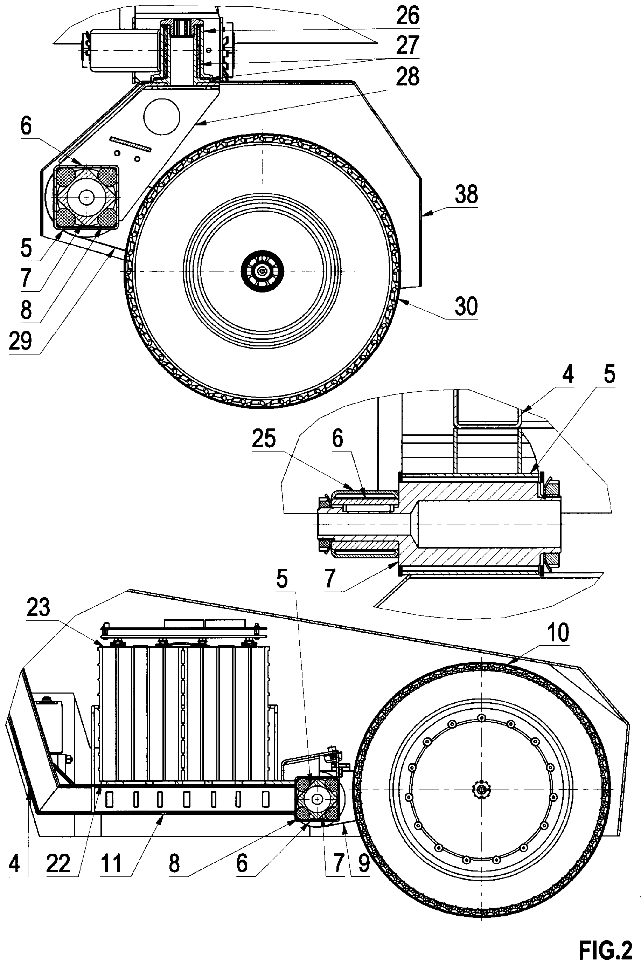

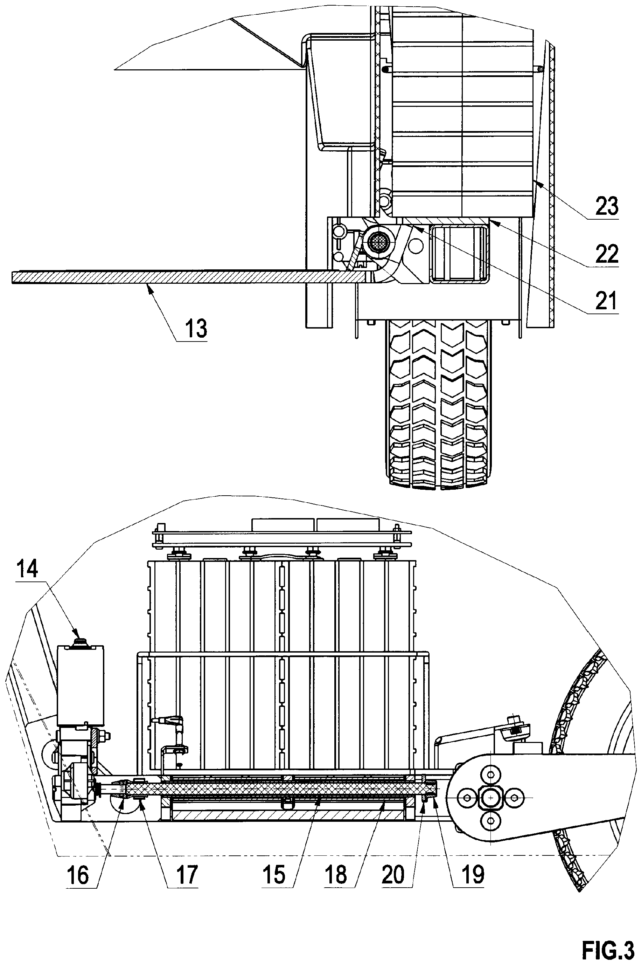

On the figures attached, there are illustrated examples of the embodiment according to the invention, where the Figure 1 shows front and rear overall axonometric view of the transport and rehabilitation multirobot; the Figure 2 shows cross-sections of the construction nodes of the multirobot, and the Figure 3 includes views of the suspension of the wheel unit and mechanism of tilting od the footboards with drive.

### AN EXAMPLE OF THE INVENTION VERSION

Multirobot 1 for transport and rehabilitation consists of two main subassemblies, which are the chassis 2 and control telescopic column 3.

The main part of the chassis is a U-shape frame 4 having in the rear part in its overhung endings transverse square profiles 6 which are part of the spring and damping torsion units 5, while each unit 5 is thus composed of said square profile 6, further four rubber cords 8 inserted into it, and a center-lead pin 7 with a square cross-section. Each pin 7 with a square cross-section is a part of two damped and split rear forks 9; while at the end of each of them there is a wheel 10 with an inserted electric motor stored.

Into each of sidewalls 11 of the frame 4 there are constrained eyes 12 in which there is pivotally arranged a footboard 13 that is interconnected with rotary drive 14 through a rubber flexible shaft 15 where it is connected with a connecting coupling 16 supplemented with a hose clamp 17.

On the opposite side, there is the flexible shaft 15 running through the center of the hollow pin 18 of the footboard 13 ended by a pressed sleeve 19 that is connected with the footboard with a shaped projection 20; while in the frame 4 on the level of footboards 13, there in the sidewalls are fixed stops 21 which are part of the bed 22 for storing of electric accumulators 23, and in the front part of the frame 4 there is longitudinally and firmly constrained the overhung pin 7 with a square cross-section which is in the central part of the spring and damping torsion unit 5 on which the front axle 24 is pivotally mounted.

The front axle 24 consists of a transverse beam 25 in the central part of which there is the square profile 6 which is a part of the spring and damping torsion unit 5. At the ends of the transverse beam 25 of the front axle 24, there are horizontal housings 26, in which there are in the bearings 27 rotatably mounted the extensions 28 with a horizontal pin. Each of these extensions 28 with horizontal pin is ended by the square profile 6; while through its center there passes the overhung pin with a square cross-section is a part of the front split fork 29. In each of the forks 19 there is arranged a non-driven front wheel 30.

Part of the frame 4 at the point of the horizontal overhung pin 7 with a square cross-section, there is a bracket 31 for attaching the control telescopic column 3 part of which is a controlled panel 32 arranged in its upper part; while from the sidewalls there are exiting the inserted elbow rests 33 with handle 34 on which the directional and speed controls 35 are located in the upper parts.

The basic part of the control telescopic column 3 is a retractable telescopic column 36, and there is a distance piece 37 between the retractable telescopic column 36 and the bracket 31.

The whole device is suitably equipped with covers 38 according to functional and design needs; while a charger 39 is mounted under the covers 38 in the front part, on the transom of the frame 4, and the control units of electric motors 40 are on the opposite side of the retractable telescopic column 36.

### FUNCTIONS

Multirobot 1 for transport and rehabilitation is intended for rehabilitation or recreational support of disabled person. This results in the necessary functions that are ensured by its structure.

The user's mobility is ensured by the driven chassis 2 supplemented by the control telescopic column 3.

The first subassembly - chassis 2 for movement of the multirobot 1 for transport and rehabilitation with the user moving within his own legs, or he/she uses the opportunity to ride on the footboards 13.

The second subassembly - control telescopic column 3 is used to position and to keep the user in standing position, including control of all the necessary functions.

Supporting part of the chassis 2 is the rigid frame 4 of the U ground plane shape on which are attached various functional extensions.

The chassis 2 at different locations, there are used spring and damping torsion units 5 differing only by the hardness of the inserted rubber cords 8; while for springing and damping is always used a square profile 6 in which there is located the pin 7 with a square cross-section and intermediate elements; the rubber cords 8 creating a springing and damping effect are arranged in corners of the square profile 6.

In the rear part of the frame, there are square profiles 6 of the spring and damping torsion units 5 including the rear forks 9 into which the driven wheels 10 with embedded motor are inserted. Further, in the sidewalls 11 of the frame 4, there are attached to it firmly the eyes 12 in which there are pivotally arranged the footboards 13 to be used for user's ride in standing position. In this position of footboards 13, the firm stops of the frame 4 are in function. For the required step movement, the user elevates the footboards 13 through the rotary drive 14 that is mounted on the frame 4 through the connecting coupling 16 which by means of the flexible shaft 15 secured to the coupling connector 16 by the hose clamp 17 transmits the torque through the center of the hollow pin 18; while at the end, there is the pressed sleeve 19 with shaped projection 20 fitting into the footboard 13.

Further, with the sidewalls 11 of the frame 4 there are firmly connected the stops 21 of footboards 13 forming also the bed 22, on which the accumulators 23 are located intended for power supply of drives of the multirobot 1 for transport and rehabilitation and its control.

In the axis of the multirobot 1 for transport and rehabilitation, in the front part of the frame 4, there is the spring and damping torsion unit 5 is placed, connected with the frame 4 through the pin 7 with a square cross-section which is part of it. This solution through the transversely swing front axle 24 allows crossing over a greater unevenness without the problem with the rear, driven wheels 10 with an inserted electric motor. Further, there are included front axles 24 formed by a transverse beam 25, at the ends of which there are vertical housings 26 into which they are rotatably mounted the extensions 27 with vertical pin 28 via bearings 27; while each of them incorporates a spring and damping torsion unit 5 servers for swing attachment of the front fork 29 in which the non-driven front wheel 30 is mounted. The wheel 30 stored pivotally in a vertical axis with eccentricity enables spontaneous rotation according to the direction of travel, while the direction and speed of travel are determined only by the rear wheels 10 with in-wheel electric motor.

In the front, reinforced part of the frame 4 is firmly connected with it the bracket 31 for the screw connection of the frame 4 with the control telescopic column 3. The control telescopic column 3 is in the bottom part formed of the retractable telescopic column 36, and this subassembly is attached to the bracket 34 of the frame through the distance piece 37; while use or exclusion serves to the basic adjustment of the height of the control telescopic column 3. The control telescopic column 3 has in the upper part a control panel 32 used that serves for status check and control of the rehabilitation multirobot for transport and rehabilitation. From the control panel 32, there extend obliquely the handles 34 for gripping by wrist, followed by the horizontal elbow rests 33 to support the user while walking or standing on the footboards 13. To control motion parameters of the multirobot 1 for transport and rehabilitation, there are used two directional and speed controls 35; while each of them is located within the reach of the handle 34.

For functional and design reasons, the multirobot 1 for transport and rehabilitation is provided with covers 38; and there is a charger 39 mounted under the covers 38 in the front part, on the transom of the frame 4, and the control units of electric motors 40 of the multirobot 1 for transport and rehabilitation are on the opposite side of the retractable telescopic column 36.

### INDUSTRIAL USE

Multirobot for transport and rehabilitation is intended for rehabilitation or recreational support of physically handicapped person as a multipurpose therapeutic, rehabilitation and training devices to maintain physical condition and to ensure tasks of everyday life.

### LIST OF THE POSITIONS USED

1) multirobot for transport and rehabilitation
2) chassis
3) control telescopic column
4) frame
5) spring and damping torsion unit
6) square profile
7) pin with a square cross-section
8) rubber cord
9) rear fork
10) wheel with an inserted electric motor
11) sidewall
12) eye
13) footboard
14) rotary drive
15) flexible shaft
16) connecting coupling
17) hose clamp
18) hollow pin
19) pressed sleeve
20) shaped projection
21) stop
22) bed
23) accumulator
24) front axle
25) transverse beam
26) horizontal housing
27) bearing
28) extensions with horizontal pin
29) front fork
30) non-driven front wheel
31) bracket
32) controlled panel
33) elbow arm
34) handle
35) directional and speed control
36) retractable telescopic column
37) distance piece
38) cover
39) charger
40) control unit

## Claims

1. Multirobot (1) for transport and rehabilitation consisting of two main subassemblies, which are the chassis (2) and control telescopic column (3), **characterized in that** the basic part of the chassis (2) is a U-shape frame (4), having in the rear part in its overhung endings transverse square profiles (6) which are part of the spring and damping torsion units (5), while each unit (5) is thus composed of said square profile (6), further four rubber cords (8) inserted into it, and a center-led pin (7) with a square cross-section, where each pin (7) with a square cross-section is part of two damped and split rear forks (9), while at the end of each of them a wheel (10) with an inserted electric motor is stored;
while into each of sidewalls (11) of the frame (4) there are from the inner side constrained eyes (12) in which there is pivotally arranged a footboard (13) that is interconnected with rotary drive (14) through a rubber flexible shaft (15) where it is connected with a connecting coupling (16) supplemented with a hose clamp (17), and on the opposite side there is the flexible shaft (15) running through the center of the hollow pin (18) of the footboard (13) ended by a pressed sleeve (19) which is connected with the footboard with a shaped projection (20); while in the frame (4) on the level of footboards (13), there in the sidewalls are fixed stops (21) which are part of the bed (22) for storing of electric accumulators (23), and in the front part of the frame (4) there is longitudinally and firmly constrained the overhung pin (7) with a square cross-section which is in the central part of the spring and damping torsion unit (5) on which the front axle (24) is pivotally mounted;
while the front axle (24) consists of a transverse beam (25) in the central part of which there is the square profile (6) which is a part of the spring and damping torsion unit (5), where at the ends of the transverse beam (25) at the front axle (24) there are the horizontal housings (26) in which there are in the bearings (27) rotatably mounted the extensions (28) with a horizontal pin, where each of these extensions (28) with horizontal pin is ended by the square profile (6), while through its center there passes the overhung pin with a square cross-section is a part of the front split fork (29) where in each of the forks (19) there is provided a non-driven front wheel (30);
while a part of the frame (4) at the point of the horizontal overhung pin(7) with a square cross-section, there is a bracket (31) for attaching the control telescopic column (3) part of which is a controlled panel (32) arranged in its upper part; while on its sidewalls there are fitted the elbow rests (33) with handle (34) on which the directional and speed controls (35) are located in the upper parts;
while the basic part of the control telescopic column (3) is a retractable telescopic column (36), and there is a distance piece (37) between the retractable telescopic column (36), and the bracket (31).

2. Multirobot (1) for transport and rehabilitation according to the claim 1 **characterized in that** it is equipped with covers (38), while a charger (39) is mounted under the covers (38) in the front part, on the transom of the frame (4), on one side of the retractable telescopic column (36), and there are control units (40) of electric motors on the opposite side.
